Europäisches Patentamt

European Patent Office

Office européen des brevets

(11) Publication number: **0 516 199 A1**

# EUROPEAN PATENT APPLICATION

(21) Application number: **92201138.2**

(22) Date of filing: **23.04.92**

(51) Int. Cl.5: **B23K 26/08**

(30) Priority: **31.05.91 NL 9100942**

(43) Date of publication of application:
**02.12.92 Bulletin 92/49**

(84) Designated Contracting States:
**CH DE DK ES FR GB IT LI NL SE**

(71) Applicant: **B.V. MACHINEFABRIEK H.H. DRENT**
**Hallseweg 21**
**NL-6964 AJ Eerbeek(NL)**

(72) Inventor: **Schoonman, Adelbert**
**Voorsterweg 64**
**NL-6971 KB Brummen(NL)**
Inventor: **Koenders, Antonius Bernardus**
**Theresia Marie**
**Gildebongerd 65a**
**Zeddam(NL)**

(74) Representative: **Bakker, Gilles Egbert, Ir.**
**Haagsch Octrooibureau, Breitnerlaan 146**
**NL-2596 HG Den Haag(NL)**

(54) **Method and device for either cutting or perforating a moving web of paper.**

(57) Method and device for either cutting or perforating a moving web of paper (4) or such like material making use of a laser beam (8), which is directed in a plane at some distance from and parallel to the plane of the web of paper (4) and onto a laser optics (9) substantially consisting of a mirror (10) for deviating the laser beam in the direction of the web of paper (4), and a lens (11) present between the mirror (10) and the web of paper (4) for focussing the laser beam (8) onto said web. The laser optics (9) is moved according to a straight line enclosing an angle ($\beta$) with the direction of movement (P) of the web of paper and with a velocity adapted to the size of the paper which has to be cut or perforated. The direction in which the laser beam (8) is directed towards the mirror (10) of said laser optics (9) runs parallel to said line.

FIG. 3

In first instance the invention relates to a method for either cutting or perforating a moving web of paper or such like material by making use of a laser beam, which by means of a movable positioned optics is moved in transverse direction over said web.

Such a method is known by DE-A-2458656. A disadvantage of this method is, that the distance between the laser optics and the web of paper is continuously changing when the laser beam moves transverse over the web of paper. This means that during this movement only one single point of the web of paper can be present in the focus of the laser beam. So the energy present in the laser beam will be dispersed over a given surface of the web of paper during the greatest part of its movement over said web. Because of this a laser beam with a relatively high energy will have to be used to obtain the desired effect. This requires such a big generating device that the known method can be applied in very special cases only.

A further disadvantage is that the laser beam will form a spot on the paper with relatively large dimensions during the gratest part of its path. This is particularly undesirable when making a perforation in the web of paper and when cutting the web of paper no clear straight line will be obtained.

Although it might be tried to focus the laser beam such that the web of paper is always present in the focus of the laser beam, in praxis this appears hardly to be possible because this brings with it that relatively large masses have to be moved quickly.

Now the object of the invention is to remove these disadvantages and to that end it is provided that the generated laser beam is directed in a plane positioned at some distance from and parallel to the plane of the web of paper and onto a laser optics being movable in this plane and substantially consisting of a mirror for deviating the laser beam directed onto it towards the web of paper and towards a lens present between said mirror and said web of paper for focussing the laser beam onto said web, the laser optics being moved according to a straight line enclosing an angle with the direction of movement of the web of paper and with a velocity adapted to the velocity of movement of said web, the direction in which the laser beam is directed towards the mirror of the laser optics running parallel to said line.

The device by which the laser beam is generated can be fixedly positioned during the displacement of the laser optics over the web of paper. Only the laser optics, which has a limited mass, has to be moved during cutting or perforating a moving web of paper, such that said web of paper can be moved with a considerable velocity.

Because the lens is always present at a small, substantially constant, distance from the web of paper a good focussing of the beam is possible. Because of this use can be made of a laser beam with relatively less energy and a clear perforation or cutting line can be obtained.

Obviously the path which is followed by the laser optics is such that during the movement of the laser beam over the width of the web of paper the distance over which the laser beam is moved in the direction of movement of the web of paper is equal to the distance over which the web of paper itself was moved.

Then the path which the laser beam follows over the web of paper runs square to the longitudinal direction of the web.

Obviously it is also possible to perforate or to cut the web of paper at an oblique angle but in most cases this will not be wanted.

The invention also relates to a device for applying the above described method, said device comprising a means for guiding the web of paper which has to be cut or perforated, a means for generating a laser beam, a laser optics positioned at a distance from the web of paper by which the generated laser beam can be directed onto the web of paper and means for moving the laser beam coming out of the laser optics at an oblique angle over the moving web of paper, said device being characterized in that said laser optics substantially consists of a mirror for deviating a laser beam directed on this and that a lens is present between the mirror and the web of paper for focussing the laser beam onto the web of paper, said laser optics being movable either along or by a guiding means extending in a plane parallel to the plane in which the paper web is present which has to be cut or perforated and at an angle to the direction of movement of the web of paper, said angle being adapted to the size of the paper which has to be cut or perforated, the means for generating the laser beam being fixedly positioned at a distance from the laser optics, such that the generated laser beam is running towards said mirror in a direction parallel to the direction of movement of said laser optics.

In case of the preferred embodiment the angle which the guiding means for the laser optics is making in respect of the web of paper is used to obtain the desired sizes of the material.

The means for generating the laser beam can be placed on a support frame which is pivotably mounted such that it can be moved in a plane running parallel to the web of paper. Then the velocity of movement of the laser optics can be proportional to the velocity of movement of the web of paper.

A simple embodiment can be obtained when the laser optics is slidably mounted on a section of the support frame and when mechanical, electrical, pneumatic or hydraulic driven means are present for moving the laser optics along said support frame.

Obviously the laser optics is not available for cutting or perforating a web of paper when it is moving back to its initial position.

To overcome this disadvantage and to allow for a higher velocity of the web of paper it can be provided for that at mutual distance two or more laser optics are connected to an endless conveyor carried by the support frame.

When now one of the laser optics has carried out his function the other one is directly activated such that the successive cuttings or perforations can be closer to each other without increasing the velocity of the laser optics. In addition the laser optics has not to move to and fro such that a much smoother running of the device will be obtained.

According to a further embodiment of the invention the distances between succeeding laser optics, measured along the conveyor, can be either equal or different.

By this it is possible to position in particular perforations at different distances from each other as this might be desirable in case of given forms.

A still greater flexibility can be obtained by coupling a number of the described devices, such that these can be operated phase shifted.

The invention is further described by means of embodiments shown in the drawing, in which:

Fig. 1 schematically shows a view of an embodiment of the device according to the invention, seen in the direction of movement of the web of paper, certain parts being omitted for the sake of clearness;

Fig. 2 schematically shows a plan view of the device of fig. 1;

Fig. 3 schematically shows a plan view of another embodiment of a device according to the invention.

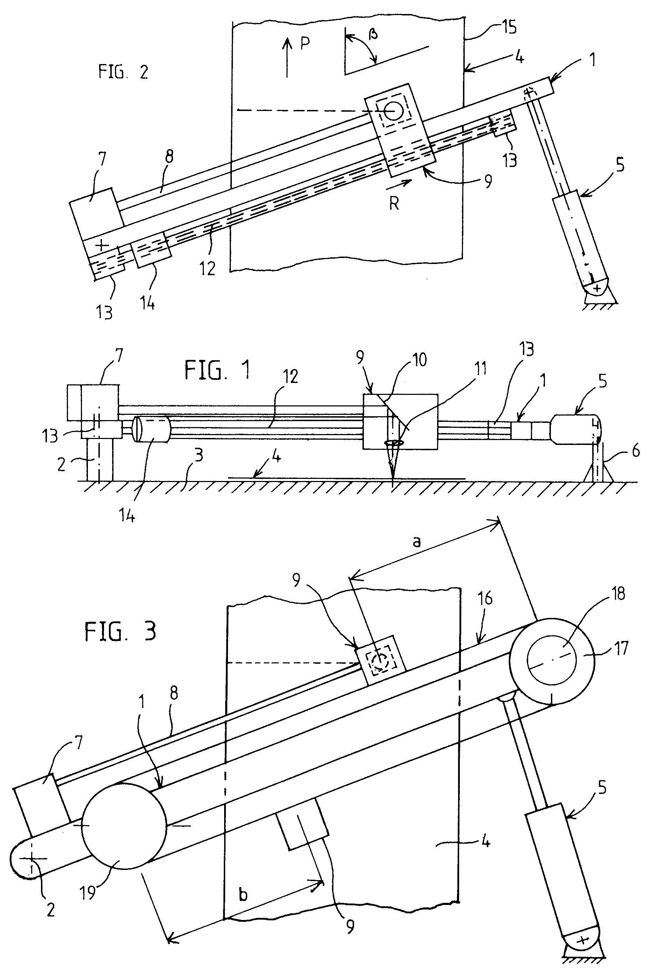

The figures 1 and 2 show a device comprising an elongated support frame 1, which is pivotably mounted by means of a shaft 2 which is supported by the frame 3 of the device.

Over the frame 3 the paper web 4 is guided which has either to be perforated or to be cut and which is moved in the direction indicated by the arrow P.

The angle $\beta$ which the support frame 1 encloses with the direction of movement P of the web of paper 4 is adjusted by means of the adjusting device which e.g. can have the shape of the pneumatic cylinder 5, which by means of the bracket 6 is connected to the frame 3 of the device. If necessary blocking means, not shown, can be present to block the support frame 1 in the desired position.

On the support frame 1 the apparatus 7 is installed which serves to generate a laser beam 8 which is directed onto the laser optics 9. The laser optics 9 comprises the mirror 10 and the lens 11 by which the laser beam, deviated by the mirror 10, is focussed onto the web of paper 4.

The laser optics 9 is movable mounted on the support frame 1 e.g. by being coupled with a screw spindle 12, which is supported by brackets 13 connected to the support frame 1 and which can be rotated in both directions by means of the electric motor 14. In this way the laser optics 9 can be moved to and fro but will only be active when it is moved in the direction of the arrow P.

In the apparatus 7 a means is provided which takes care for it that a laser beam 8 is only directed onto the mirror 10 when this can be used for cutting or perforating the web of paper 4.

When the motor 14 takes care for moving the laser optics 9 with a given velocity the angle $\beta$ will be chosen such that, in case of a given velocity of movement of the web op paper 4, the distance over which said web 4 is moved during the cutting or perforating is equal to the distance over which the laser optics 9 is moved as seen in the direction of the arrow P and between the longitudinal edges 15 of the web of paper 4.

When the velocity of movement P of the web of paper 4 is changed the velocity of the laser optics 9 in the direction of the arrow R will be changed too.

When a web of paper 4 is cut by means of the device means will be used for continuing the guiding of the web of paper below the device. This, however, will be obvious for an expert and will not need further description.

Fig. 3 schematically shows a device which is modificated in respect of the figures 1 and 2 and in which corresponding parts are indicated by the same reference numbers.

On the support frame 1, being pivotable mounted by means of the shaft 2, the endless conveyor 16 is positioned. At the one end this conveyor 16 is supported by de wheel 17, which can be driven by the motor 18, and at the other end by the idle wheel 19.

The apparatus 7 again is positioned on the support frame 1 to generate a laser beam 8, being directed to the laser optics 9. Two laser optics 9 are mounted to the endless conveyor 16 such that when the one laser optics has taken care for cutting or perforating a web of paper 4 the other laser optics 9 can be directly activated for carrying out a next cutting or perforating. Also both laser optics 9 will continuously have the same velocity, which will contribute to the right working of the device.

Further the possibility exists to mount the laser optics 9 in such a way to the conveyor 16 that the distances a and b, indicated in fig. 3, will be different. This brings with it that two mutual different distances are present between succeeding cuttings or perforations.

Although in case of the device shown in fig. 3 two laser optics are used there can be used also three or more of these.

In case of the device according to fig. 3, generally speaking, a higher velocity of the web of paper 4 can be applied than in case of the device according to the figures 1 and 2. The angle betwen the support frame 1 and the direction of movement of the web of paper 4 again can be established and can be adjusted by means of the device 5.

It will be obvious that only some possible embodiments of a device according to the invention are shown in the drawing and are described above and that many modifications can be applied without leaving the inventive concept.

So it is possible that the apparatus 7 is not mounted on the support frame 1 but is fixed to the frame 3, it being obvious that then in the laser beam suitable optical components have to be arranged. In that case it is possible to mount a mirror fixedly to the support frame 1, to wit in the point where the centre line of the laser beam 8 and the axis of rotation of the support frame 1 intersect each other.

Further it is possible to change the velocity of movement of a laser optics such as by changing the speed of the related driving motor 14 either 18, such that the support frame can be maintained at the same angle. Generally speaking, however, pivoting of the support frame can be carried out easier.

## Claims

1. Method for either cutting or perforating a moving web of paper (4) or such like material by making use of a laser beam (8), which by means of a movable positioned optics (9) is moved in transverse direction over said web (4), characterized in that the generated laser beam (8) is directed in a plane positioned at some distance from and parallel to the plane of the web of paper (4) and onto a laser optics (9) being movable in this plane and substantially consisting of a mirror (10) for deviating the laser beam (8) directed towards it and to the web of paper (4) and to a lens (11) present between said mirror (10) and said web of paper (4) for focussing the laser beam (8) onto said web, the laser optics (9) being moved according to a straight line enclosing an angle with the direction of movement of the web of paper (4) and with a velocity adapted to the velocity of movement of said web (4), the direction in which the laser beam (8) is directed towards the mirror (10) of the laser optics (9) running parallel to said line.

2. Device for applying the method acording to claim 1, said device comprising a means for guiding the web of paper (4) which has to be cut or perforated, a means (7) for generating a laser beam (8), a laser optics (9) positioned at a distance from the web of paper (4) by which the generated laser beam (8) can be directed towards the web of paper and means for moving the laser beam coming out of the laser optics (9) at an oblique angle over the moving web of paper (4), characterized in that said laser optics (9) substantially consists of a mirror (10) for deviating a laser beam (8) directed towards this and that a lens (11) is present between the mirror (10) and the web of paper (4) for focussing the laser beam onto the web of paper, said laser optics (9) being movable either along or by a guiding means (1,16) extending in a plane parallel to the plane in which the paper web (4) is present which has to be cut or perforated and at an angle ($\beta$) to the direction of movement (P) of the web of paper, said angle ($\beta$) being adapted to the size of the paper which has to be cut or perforated, the means (7) for generating the laser beam (8) being fixedly positioned at a distance from the laser optics (9), such that the generated laser beam (8) is running towards said mirror (10) in a direction parallel to the direction of movement of said laser optics (9).

3. Device according to claim 2, characterized in that the laser optics (9) and the means (7) for generating the laser beam (8) are placed on a support frame (1) which is pivotably mounted such that it can be moved in a plane running parallel to the web of paper (4).

4. Device according to claim 3, characterized in that the laser optics (9) is slidably mounted on a section of the support frame (1), mechanical, electrical, pneumatic or hydraulic driven means (12,14,18) being present for moving the laser optics (9) along said support frame (1).

5. Device according to claim 3, characterized in that two or more laser optics (9) are provided at mutual distance to an endless conveyor (16) carried by the support frame (1).

6. Device according to claim 5, characterized in that the distances between succeeding laser optics (9), measured along the conveyor (16), are either equal or different.

FIG. 2

FIG. 1

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WORLD PATENTS INDEX Week 7832, Derwent Publications Ltd., London, GB; AN 78-G2322A¦32 & SU-A-504 348 (CELLULOSE PAPER MAC) 8 August 1977 | 1-4 | B23K26/08 |
| Y | * abstract * | 5,6 | |
| Y | GB-A-2 032 325 (COHERENT INC.) 8 May 1980 * page 1, line 81 - line 103 * * abstract; claim 1; figure 1 * | 5,6 | |
| X A | US-A-4 639 572 (B. GRUZMAN) 27 January  1987 * column 2, line 25 - line 45 * * column 7, line 3 - line 28 * * abstract; figures 8,9 * | 1-4 5,6 | |
| | ----- | | **TECHNICAL FIELDS SEARCHED (Int. Cl.5 )** |
| | | | B23K |

The present search report has been drawn up for all claims

| Place of search | Date of completion of the search | Examiner |
|---|---|---|
| THE HAGUE | 10 SEPTEMBER 1992 | HAEGEMAN M. |